# FASCICULE DE BREVET EUROPEEN

(11) **EP 3 970 386 B1**
(45) Date de publication et mention de la délivrance du brevet: **23.09.2026**
(21) Numéro de dépôt: 20724830.3
(22) Date de dépôt: 11.05.2020
(51) Int. Cl.: H04N 21/438, H04N 21/643

(54) **PROCÉDÉ DE GESTION DE LA RÉCEPTION DE CONTENUS NUMÉRIQUES PAR UN DISPOSITIF D'ACCÈS**
VERFAHREN ZUR VERWALTUNG DES EMPFANGS VON DIGITALEM INHALT DURCH EINE ZUGANGSVORRICHTUNG
METHOD FOR MANAGING THE RECEPTION OF DIGITAL CONTENT BY AN ACCESS DEVICE

(30) Priorité: 13.05.2019 FR 1904933
(43) Date de publication de la demande: 23.03.2022
(73) Titulaire: Orange, 92130 Issy-les-Moulineaux (FR)
(72) Inventeur: RIVOALEN, Mathieu, 92326 Châtillon Cedex (FR); MARCHAND, Hervé, 92326 Châtillon Cedex (FR)
(86) Numéro de dépôt international: PCT/EP2020/062966
(87) Numéro de publication internationale: WO 2020/229379

(56) Documents cités:
- EP-A1- 2 136 555
- EP-A1- 2 136 555
- EP-A1- 2 237 549
- US-B1- 8 533 760

## Description

### Domaine technique

L'invention se rapporte au domaine des télécommunications.

Plus particulièrement, l'invention se rapporte à un procédé de gestion de l'accès à des contenus multimédias par un dispositif d'accès en vue d'une restitution sur un dispositif de restitution.

On entend par contenus multimédias tout contenu audio et/ou vidéo tel que des chaînes de télévision aussi appelée chaînes audiovisuelles.

Le dispositif d'accès visé est un dispositif à part entière apte à être connecté à un dispositif de restitution. Ce dispositif d'accès est par exemple un téléviseur connecté à un réseau de communication, un décodeur de télévision numérique, une passerelle domestique, etc.

### Etat de la technique

On a vu récemment se développer de nouveaux modes de commande pour le contrôle des appareils audiovisuels. Le moyen de naviguer consiste en général à utiliser les flèches de direction d'une télécommande, notamment utiliser les boutons P+ et P- pour naviguer, ou « zapper », très simplement entre les chaînes audiovisuelles proposées sur une interface graphique restituée sur le dispositif de restitution.

Le temps nécessaire pour réaliser un zapping par touche P+ / P- sur un décodeur de télévision numérique connecté sur un réseau par exemple de type IPTV (de l'anglais « Internet Protocol Television ») est relativement important, de l'ordre de 3 secondes environ. En effet, pour accéder à un flux diffusé en multicast, le décodeur doit s'abonner à ce flux, par exemple à travers un protocole IGMP (sigle anglo saxon de « Internet Group Management Protocol »). Le temps nécessaire à l'affichage du flux sur le téléviseur dépend alors de nombreux facteurs comme la taille des groupes d'images GOP (sigle anglo-saxon de « Group Of Pictures ») conformément à la norme MPEG (sigle anglo-saxon de « Moving Picture Experts Group ») ou la taille de la mémoire tampon (aussi appelé Buffer) présente dans le décodeur.

Certaines techniques permettent de réduire considérablement ce temps d'attente comme la technique appelée « fast zapping » connue de l'homme du métier. Cette technique disponible pour des terminaux disposant d'une bande passante très importante consiste à recevoir plusieurs flux de données en même temps ; plus particulièrement, le principe consiste à accéder (ou « à s'abonner ») automatiquement à une chaîne sélectionnée et aussi à d'autres chaînes par exemple aux chaînes adjacentes, à savoir la chaine précédente et la chaine suivante. Le décodeur reçoit ensuite les flux de données correspondants aux trois chaînes, et décode les flux de données correspondants. A ce stade, la chaîne sélectionnée est restituée et les autres données correspondantes aux chaînes adjacentes sont reçues et prêtes à être restituée sur requête.

Aussi, si le décodeur reçoit une commande de changement de chaîne, et que la chaîne visée fait partie des chaînes adjacentes ; dans ce cas de figure, cette chaîne télévisée est restituée sans nécessiter d'envoi d'une commande d'abonnement sur le réseau. Il en résulte un changement de chaîne (aussi appelé zapping) très rapide.

Cette technique dite du « fast zapping », ou zapping rapide, est cependant très consommatrice de ressource réseau, en particulier en bande passante ; de plus, un abonnement aux chaines n'a d'intérêt que si l'utilisateur souhaite visualiser la chaîne en question. Or, l'abonnement est réalisé à chaque demande de changement de chaîne sans prendre en compte le souhait ou pas de visualiser la chaîne en question.

US2010100913 décrit un procédé dans lequel un décodeur filtre les requêtes de changement de chaîne lors d'un zapping rapide afin de réduire le nombre de requêtes envoyées au réseau tout en affichant localement des informations sur les chaînes sélectionnées.

L'invention vient améliorer la situation.

### L'invention

L'invention est définie par les revendications jointes.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est une vue schématique d'un décodeur selon un mode de réalisation.
[Fig. 3] La figure 3 illustre un échange de messages entre une télécommande, un décodeur et un serveur fournisseur de contenus multimédias illustrant un premier mode de réalisation.
[Fig. 4a] La figure 4a illustre un premier mode de réalisation pour détecter une phase de zapping rapide utilisant une temporisation.
[Fig. 4b] La figure 4b illustre un échange de messages entre une télécommande, un décodeur et un serveur fournisseur de contenus multimédias illustrant un deuxième mode de réalisation.
[Fig. 5] La figure 5 illustre un mode de réalisation dans lequel la transmission d'une requête d'accès à un contenu télévisé est suivie d'une réception de données informatives relatives à plusieurs contenus télévisés.

### Description détaillée de modes de réalisation de l'invention

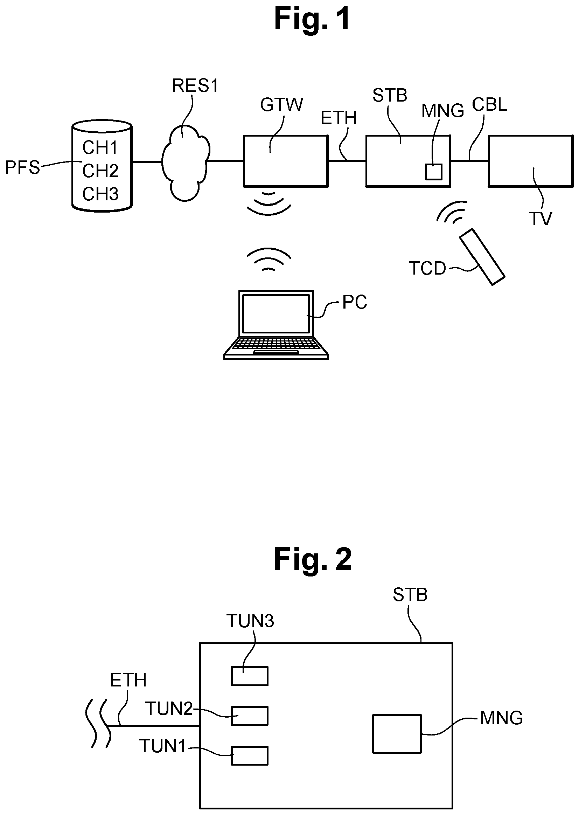

La figure 1 représente un système SYS comprenant un dispositif de commande TCD, un dispositif d'accès STB, une télévision TV, une plateforme de services PF.

Dans notre exemple, le dispositif STB est un décodeur. Ce décodeur STB communique avec la plateforme de services PFS via un réseau de communication RES1. Dans notre exemple, cette communication s'effectue via une passerelle domestique GTW (ou routeur). Le réseau de communication RES1 utilisé entre la passerelle GTW et la plateforme PFS est par exemple un réseau étendu WAN tel que le réseau Internet.

Dans notre exemple, la plateforme de services PFS comprend une pluralité de services tels que l'accès à des contenus multimédias chaînes de télévision, vidéo à la demande, TV à la demande, jeux en ligne, etc.

Dans les différents exemples décrits dans le présent texte, les contenus seront des chaînes de télévision. La plateforme PFS pourrait aussi être éclatée de manière à offrir des services répartis dans le réseau RES1.

Dans notre exemple, le dispositif commande TCD est une télécommande TCD qui permet de commander le décodeur STB. Une commande est par exemple un accès aux chaînes de télévision. Grâce à la télécommande, l'utilisateur peut zapper d'une chaîne de télévision vers une autre.

Le décodeur STB et la passerelle GTW ont une architecture matérielle équivalente à un ordinateur ; l'architecture d'un ordinateur ne sera pas décrite plus en détails ici pour simplifier l'exposé de l'invention.

En référence à la figure 1, le décodeur STB comprend un module d'accès apte à requérir la réception (l'homme du métier utilise aussi l'expression « apte à s'abonner à») d'un ou plusieurs flux de données multimédia illustrés par des chaînes de télévision dans notre exemple de réalisation. Dans notre exemple, ce module d'accès est un programme d'ordinateur stocké dans une mémoire morte du décodeur STB.

Pour recevoir plusieurs flux de données, en référence à la figure 2, dans notre exemple, le décodeur STB est équipé de plusieurs démodulateurs (aussi appelés tuners par l'homme du métier) TUN1-TUN3. Plus particulièrement, ce dispositif d'accès DISP est apte à requérir un accès à une chaîne principale sélectionnée via la télécommande TCD et à requérir la réception d'autres chaînes CH typiquement les chaînes adjacentes CH- et CH+, dites chaînes secondaires. La requête d'accès à la chaîne principale ou aux chaînes secondaires peuvent se faire simultanément ou à des instants différents.

Ces demandes d'accès, appelées aussi abonnements, aux chaînes concernées, faites par le décodeur STB, sous-entendu le module d'accès, sont dans notre exemple les chaînes CH-/CH/CH+, CH- et CH+ désignant dans notre exemple les chaînes adjacentes de la chaîne restituée CH. Des chaînes autres que les chaînes adjacentes auraient pu être choisies en complément ou en remplacement des chaînes adjacentes.

Concrètement, le décodeur STB requiert
- la réception d'un premier flux principal, (on dit aussi « s'abonne au premier flux ») ; celui-ci sera restitué sur l'écran TV,
- ainsi que, dans notre exemple, la réception de flux secondaires à savoir les chaînes adjacentes CH- et CH+.

Après réception des flux, le décodeur STB décode les trois flux reçus, par exemple en même temps. A ce stade, une chaîne de télévision est reçue et restituée, et deux autres chaînes sont reçues par le décodeur prêtes à être restituées sur demande. Après réception, les chaînes secondaires sont stockées dans une mémoire tampon présente dans le décodeur. De cette manière, si le décodeur STB reçoit une commande de changement de chaîne CH+, le décodeur requiert la restitution de la chaîne CH+ en lieu et place de la chaîne CH sans nécessiter l'envoi d'une requête d'accès à la chaîne demandée CH+ auprès de la plateforme PFS. Cette méthode accélère la restitution d'une chaîne.

Dans notre exemple, la télécommande TCD communique avec le décodeur STB via un lien de communication qui peut être filaire (USB, Ethernet, etc.) ou non filaire par exemple de type Wifi, ZigBee. Dans notre exemple, la télécommande et le décodeur sont équipés de modules Zigbee respectifs. Rappelons que Zigbee est une technologie sans fil radio de basse puissance ; il est possible d'échanger sur un canal radio des messages conformes au protocole ZigBee. Précisons que le protocole ZigBee est un protocole de haut niveau permettant la communication de petites radios, à consommation réduite, basée sur la norme IEEE 802.15.4 pour les réseaux à dimension personnelle (Wireless Personal Area Networks : WPAN).

Dans notre exemple, le décodeur STB est relié par un câble CBL à la télévision TV. Le câble est par exemple un câble HDMI. Dans notre exemple, le décodeur est relié à la passerelle via un câble Ethernet ETH.

Le décodeur STB reçoit une commande de sélection de chaîne SEL(CHx), d'une chaîne télévisée CHx (TF1, FR2, BBC, etc.), issue de la télécommande TCD et peut transmettre une requête d'accès REQ(CHx) à la chaîne sélectionnée CHx correspondante.

L'utilisateur de la télécommande TCD peut réaliser plusieurs sauts de chaînes. Lorsque les sauts de chaînes sont rapides on parle de zapping rapide. Lors d'un zapping rapide, la transmission de requêtes d'accès est systématique ; cela encombre le réseau inutilement ; en effet, à chaque sélection de chaîne, un abonnement à la chaîne est effectué. Or, lorsqu'un utilisateur zappe rapidement plusieurs chaînes successivement, par exemple d'une chaîne CHx à une chaîne CHy, l'abonnement aux chaînes intermédiaires situées entre CHx et CHy est extrêmement consommateur en bande passante ; en effet, comme expliqué précédemment, un abonnement ou accès à une chaîne entraîne la réception de la chaîne sélectionnée mais aussi dans certains cas des chaînes adjacentes comme expliqué ci-dessus. A cet effet, l'invention propose, lorsqu'une phase de zapping rapide ZR est détectée, pour au moins une partie des requêtes d'accès reçues correspondant à des commandes de sélection reçues au cours la phase détectée, une transmission par la plateforme, à la place du contenu demandé, d'au moins un autre contenu incluant des données informatives relatives au contenu sélectionné, cet autre contenu pouvant être affichée pendant la phase de zapping rapide de manière à ce que l'utilisateur puisse voir un contenu correspondant à chaque contenu télévisé sélectionné.

La phase de détection de zapping rapide a lieu lorsque des commandes de sélection sont reçues successivement et que l'espacement entre des commandes consécutives est inférieur à une durée donnée (Tmax) ; plus précisément l'espacement entre une commande reçue et la suivante. Un compteur (chronomètre ou autres dispositifs similaires) mesure l'intervalle de temps entre une commande reçue et si la commande suivante st reçue avant une durée Tmax, on considère qu'un zapping rapide est en cours. Si aucune commande n'est reçue dans ce délai Tmax, on considère que le zapping est normal.

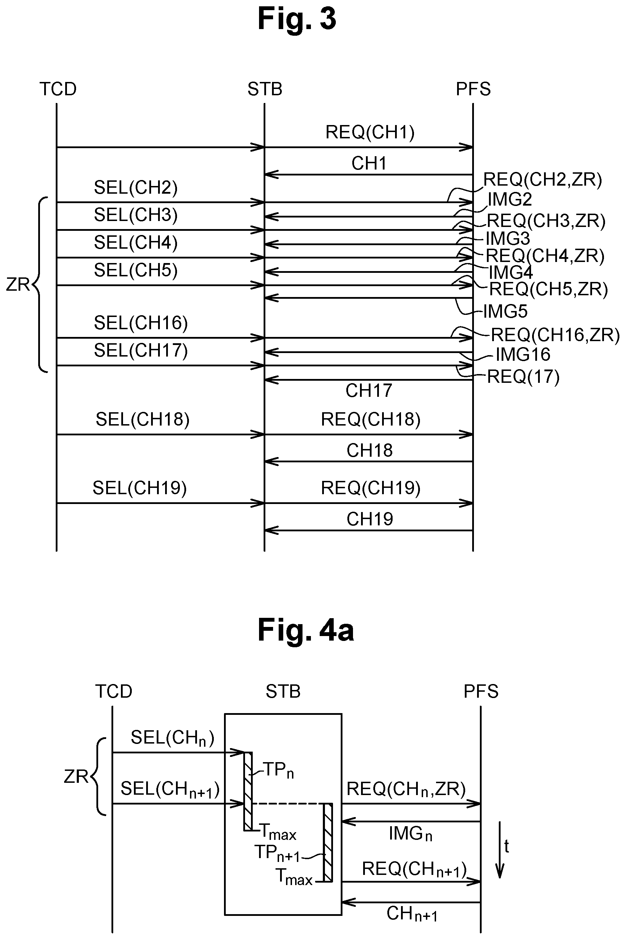

La figure 3 illustre le principe général décrit ci-dessus. Sur cette figure 3, trois axes sont représentés, un premier axe pour la télécommande TCD, un deuxième axe pour le décodeur STB, et un troisième axe pour la plateforme PFS.

Des commandes de sélection SEL(CHn) sont transmises par la télécommande TCD à destination du décodeur STB ; le décodeur STB transmet ensuite tout ou partie requêtes d'accès aux chaînes CHn respectives à la plateforme PFS.

Sur la figure 3, une première commande SEL(CH1) est transmise au décodeur STB qui transmet ensuite une requête d'accès à la chaîne CH1. Le décodeur STB reçoit en retour un flux télévisé CH1 qu'il restitue sur l'écran ECR.

Plus tard, l'utilisateur zappe rapidement de la deuxième chaîne CH2 à la chaîne CH17.

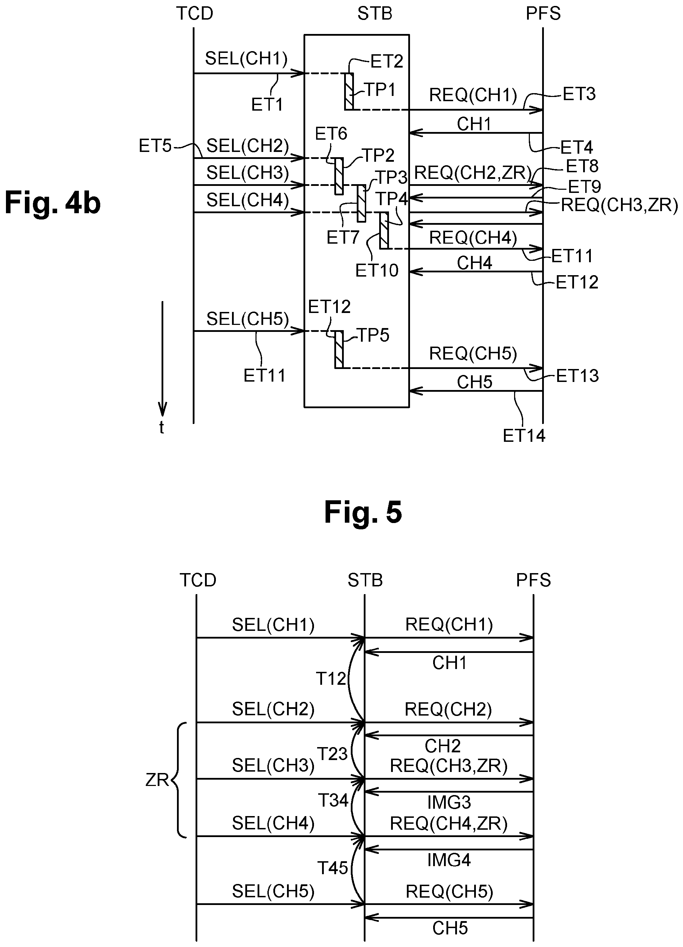

Une entité de gestion MNG, dans notre exemple présente dans le décodeur STB, détecte cette phase de zapping rapide ZR. Deux méthodes de détermination de phase de zapping rapide seront expliquées en détails en référence aux figures 4a/4b et 5.

Au cours de cette phase de zapping rapide ZR, suite à la réception de commandes de sélection, le décodeur STB des requêtes d'accès associées aux commandes de sélection incluant une donnée ZR informant qu'une phase de zapping rapide est en cours.

A réception d'une requête émise au cours d'un zapping rapide ZR, la plateforme reçoit la requête, extrait la donnée ZR et conclut qu'une phase de zapping rapide ZR est en cours. En retour, la plateforme PFS transmet non pas le contenu télévisé demandé mais un autre contenu relatif au contenu télévisé demandé, l'autre contenu étant une image incluant des données informatives relatives au contenu sélectionné. L'image peut contenir des informations telles que la durée du contenu télévisé, le nom du film si le contenu est un film, etc.

Suite à la transmission de la requête REQ(CH17), cette requête ne comprenant pas de donnée ZR, le décodeur STB reçoit en retour un flux télévisé CH17 qu'il restitue sur l'écran ECR.

Suite à la phase de zapping rapide ZR, l'utilisateur visualise cette chaîne CH17.

Plus tard, l'utilisateur zappe normalement et sélectionne une chaîne CH18. Le décodeur STB reçoit la commande de sélection SEL(CH18) et transmet une requête d'accès REQ(CH18) à destination de la plateforme PFS.

Le décodeur reçoit en retour un flux télévisé CH18 qu'il restitue sur l'écran ECR.

Plus tard encore, l'utilisateur zappe normalement et sélectionne une chaîne CH19. Le décodeur STB reçoit la commande de sélection SEL(CH19). Aucune phase de zapping n'étant détectée, le décodeur STB transmet une requête d'accès REQ(CH19) à destination de la plateforme PFS.

Le décodeur reçoit en retour un flux télévisé CH19 qu'il restitue sur l'écran ECR.

Les figures 4a et 4b illustrent une solution permettant de détecter la phase de zapping rapide au moyen d'un compteur temporel et d'une temporisation apte à retarder la transmission d'une requête d'accès liée à une commande d'accès reçue.

La figure 4a illustre le principe utilisé et la figure 4b un mode de réalisation associé.

Comme sur la figure 3, sur la figure 4a, trois axes sont attribués respectivement à la plateforme PF qui transmet des flux télévisés sur demande, au décodeur STB et à la télécommande TCD.

Une première commande de sélection d'un contenu télévisé CHn (n est un entier) est reçue dans un premier temps. Une temporisation TPn est mise en œuvre.

Si aucune commande de sélection n'est reçue pendant la temporisation TPn (cas non représenté sur la figure 4a), une requête d'accès au contenu sélectionné est transmise vers la plateforme PFS.

Si une commande de sélection SEL(CHn+1) est reçue pendant la temporisation TPn, une phase de zapping rapide ZR est détectée. Une requête d'accès REQ(Cn,ZR) est transmise et une nouvelle temporisation TPn+1 est mise en œuvre ; la requête REQ(Cn,ZR) inclut une donnée ZR informant qu'une phase de zapping rapide est détectée au niveau du dispositif d'accès.

Si aucune commande de sélection n'est reçue pendant la nouvelle temporisation TPn+1, cela signifie que phase de zapping rapide est finie ; une requête d'accès correspondante REQ(CHn+1) est transmise à destination de la plateforme PFS. Cette requête n'inclut pas la donnée ZR. La durée de la temporisation est par exemple de l'ordre de 500 ms. Sur les figures 4a et 4b, la durée maximum de temporisation Tmax est représentée de manière hachurée.

Selon une variante possible, une donnée peut aussi être transmise sans détection de zapping rapide. Cette donnée est incluse dans la requête d'accès de manière à informer la plateforme de service qu'il n'y a pas de zapping rapide en cours.

Si l'utilisateur zappe rapidement juste après la mise sous tension de la télévision, cela peut avoir pour conséquence de ne rien afficher à l'écran. Dans notre exemple, le principe décrit en référence à la figure 4a peut ne pas être utilisé lors de la réception d'une première commande de sélection de manière à afficher un contenu sur l'écran.

La figure 4b est une vue schématique d'abonnements successifs à différentes chaînes CHn (« n » est un entier). On verra dans cet exemple que l'utilisateur sélectionnera cinq chaînes de télévision CH1-CH5 successivement dont certaines au cours d'une phase de zapping rapide ZR, à savoir de la chaîne courante CH2 à la chaîne CH4.

Comme sur la figure 3, sur la figure 4b, trois axes sont attribués respectivement à la plateforme PF qui transmet des flux télévisés sur demande, au décodeur STB et à la télécommande TCD.

Dans notre exemple, dès qu'une commande de sélection SEL(CHn) est reçue par le décodeur STB, un compteur (timer en anglais) mesure le temps qui s'écoule et une temporisation temporise la transmission de la requête d'accès correspondante.

En référence à la figure 4b, les étapes ETm (m est un entier) illustrant un mode de réalisation basé sur le principe décrit ci-dessus sont décrites ci-dessous.

Lors d'une première étape ET1, une première chaîne de télévision CH1 est sélectionnée par un utilisateur au moyen de la télécommande TCD.

Lors d'une deuxième étape ET2, le décodeur STB reçoit la commande de sélection SEL(CH1). Après réception, une temporisation TP1, dans notre exemple de 500 ms, est mise en marche lors d'une deuxième étape ET2.

Dans notre exemple, le décodeur STB ne reçoit pas de nouvelle commande de sélection au cours de la temporisation TP1, la requête d'accès REQ(CH1) est donc transmise à destination de la plateforme PFS lors d'une troisième étape ET3.

Dans notre exemple, la requête REQ(CH1) comprend également une requête d'accès aux chaînes adjacentes à savoir CH0 et CH2 ; Comme expliqué ci-dessus, cela permet par la suite, lorsque l'utilisateur zappe vers la chaîne CH2 d'afficher la chaîne CH2 plus rapidement celle-ci étant déjà, en cours de réception par un tuner présent dans le décodeur STB.

Le décodeur STB reçoit en retour, Lors d'une quatrième étape ET4, des flux dont le flux télévisé correspondant à la chaîne CH1, qui peut à ce moment-là être restitué sur l'écran ECR.

Ensuite, l'utilisateur décide de zapper rapidement plusieurs fois :
Lors d'une cinquième étape ET5, l'utilisateur zappe une première fois de la première chaîne CH1 vers la deuxième chaîne CH2. Une commande de sélection SEL(CH2) est transmise au décodeur STB.

A réception le décodeur enclenche une temporisation TP2 lors d'une sixième étape ET6.

Au cours de la temporisation TP2, le décodeur reçoit une nouvelle commande d'accès SEL(CH3). La temporisation TP2 est annulée ; une nouvelle temporisation TP3 associée à la dernière commande reçue SEL(CH3) est enclenchée lors d'une septième étape ET7.

Dans notre exemple, lorsque le décodeur STB reçoit la commande de sélection SEL(CH3), lors d'une huitième étape ET8, une requête d'accès REQ(CH2,ZR) est transmise à la plateforme PFS, la requête d'accès comprenant le contenu télévisé et une donnée ZR informant qu'un zapping rapide ZR est en cours.

Lors d'une neuvième étape ET9, la plateforme PFS transmet en réponse un contenu autre que le contenu demandé CH2. La plateforme transmet une des données relatives au contenu demandé CH2. Dans notre exemple, ces données sont représentées par une image contenant par exemple des informations sur le contenu télévisé telles que le nom du programme, l'heure de fin, etc.

Au cours de la temporisation TP3, le décodeur reçoit une nouvelle commande d'accès SEL(CH4). La temporisation TP3 est annulée ; une nouvelle temporisation TP4 associée à la dernière commande reçue est enclenchée lors d'une dixième étape ET10.

Aucune commande de sélection n'est reçue au cours de la temporisation TP4, une requête d'accès correspondante REQ(CH4) est transmise lors d'une onzième étape ET11 après la temporisation TP4. Le zapping rapide ayant pris fin, la requête REQ(CH4) ne comprend pas de donnée ZR.

Lors d'une douzième étape ET12, le décodeur reçoit la chaîne CH4 correspondante.

Dans notre exemple, dix secondes plus tard, lors d'une onzième étape ET11, l'utilisateur zappe de nouveau vers la chaîne CH5.

Une temporisation TP5 est mise en œuvre lors d'une douzième étape ET12. Aucune commande sélection n'est reçue au cours de cette temporisation TP5, le décodeur STB transmet alors, après expiration de la temporisation TP5, la requête d'accès correspondante REQ(CH5) lors d'une treizième étape ET13 et reçoit en retour le contenu télévisé CH5 correspondant lors d'une quatorzième étape.

A ce stade, le décodeur peut restituer la chaîne en question CH5 et la restituer.

La figure 5 est une variante selon laquelle une transmission d'une requête d'accès, par exemple la requête d'accès REQ(CH2), la plateforme transmet des données informatives IMG2 sur le contenu télévisé demandé CH2 mais également sur des données informatives IMG3-IMG15 de contenus télévisés autres que le contenu demandé. De cette manière, lorsqu'un contenu est sélectionné par la suite, par exemple le contenu CH3, les données informatives associées IMG3 étant stockées dans le dispositif d'accès STB, celles-ci peuvent être affichées sur l'écran sans nécessiter de transmission d'une requête d'accès REQ(CH3) au contenu CH3 à destination de la plateforme PFS. L'économie en bande passante est considérable.

Selon un deuxième de réalisation illustré sur la figure 5, la détection d'une phase de zapping rapide peut être réalisée d'une autre manière que celle illustrée en référence aux figures 4a et 4b utilisant une temporisation. Dans ce second mode de réalisation, lorsqu'une commande de sélection est reçue, une mesure de la durée écoulée entre la commande courante reçue et la précédente commande reçue est déterminée ; si la durée déterminée est inférieure à une durée donnée Tmax, on considère que le zapping est rapide. En référence à la figure 5, un utilisateur sélectionne une chaine CH1 ; cette sélection SEL(CH1) est reçue par le décodeur ; comme cette commande de sélection est la première reçue, une requête d'accès REQ(CH1) est transmise par le décodeur à la plateforme.

L'utilisateur reçoit ensuite une autre commande de sélection SEL(CH2). L'unité de gestion mesure la durée écoulée T12 entre cette commande de sélection SEL(CH2) et la précédente SEL(CH1). Dans notre exemple, cette durée T12 est supérieure à la durée Tmax, le zapping n'est donc pas un zapping rapide ; une requête d'accès REQ(CH2) est donc transmise par le décodeur à la plateforme.

Ensuite, l'utilisateur sélectionne une chaîne CH3. L'unité de gestion mesure la durée écoulée T23 entre cette commande de sélection SEL(CH3) et la précédente SEL(CH2). Dans notre exemple, cette durée T23 est inférieure à la durée Tmax, le zapping est donc un zapping rapide ; Une requête d'accès REQ(CH3,ZR) comprenant un identifiant de contenu télévisé et une donnée ZR est transmise par le décodeur à la plateforme. La plateforme transmet en retour un autre contenu IMG3 comme une image de la même façon que sur la figure 4b.

Ensuite, l'utilisateur sélectionne une chaîne CH4. L'unité de gestion mesure la durée écoulée T34 entre cette commande de sélection SEL(CH4) et la précédente SEL(CH3). Dans notre exemple, cette durée T34 est inférieure à la durée Tmax, le zapping est donc toujours un zapping rapide ; dans notre exemple, Une requête d'accès REQ(CH4,ZR) comprenant un identifiant de contenu télévisé et une donnée ZR est transmise par le décodeur à la plateforme. La plateforme transmet (étape non représentée pour simplifier le dessin) en retour un autre contenu comme une image de la même façon que sur la figure 4b.

Ensuite, l'utilisateur sélectionne une chaîne CH5. L'unité de gestion mesure la durée écoulée T45 entre cette commande de sélection SEL(CH5) et la précédente SEL(CH4). Dans notre exemple, cette durée T45 est supérieure à la durée Tmax, le zapping rapide a donc cessé. La requête d'accès REQ(CH5) est donc transmise par le décodeur à la plateforme.

A noter que la détection de la phase rapide ZR peut être réalisée hors du décodeur STB. Par exemple, un module de détection de phase de zapping rapide peut être installé dans la télécommande. L'information relative à l'existence d'un zapping rapide peut alors être transmise au décodeur STB. On considère maintenant la structure simplifiée du décodeur STB selon un exemple de réalisation de l'invention. Un tel décodeur STB est adapté pour mettre en œuvre le procédé de gestion de l'accès aux contenus télévisés. Précisons ici que le dispositif d'accès STB et le serveur de contenus PFS ont la structure matérielle d'un ordinateur conventionnel. Ils comprennent comprend notamment des ressources physiques et/ou logicielles, à savoir des mémoires M associées à un processeur. Les mémoires peuvent être de type ROM (de l'anglais « Read Only Memory ») ou RAM (de l'anglais « Random Access Memory ») ou encore Flash. Elles permettent notamment le stockage d'un programme dans la mémoire morte pour la mise en œuvre de l'invention. A l'initialisation, les instructions de code du programme d'ordinateur sont par exemple chargées dans une mémoire RAM avant d'être exécutées par le circuit de traitement.

Précisons enfin ici que le terme module ou le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de l'accès, par un dispositif d'accès (STB), à des contenus multimédias (CH1-CH5) via un réseau de communication (RES), les contenus étant stockés sur un serveur de contenus, le dispositif d'accès étant apte à recevoir des commandes de sélection de contenus multimédias (SEL(CH1)-SEL(CH5)) depuis un dispositif de commande (TCD) et à transmettre des requêtes d'accès respectives (REQ(CH1)-REQ(CH5)) via le réseau de communication (RES) à destination du serveur de contenus, **caractérisé en ce qu'**il comprend, dans le dispositif d'accès,
- une détection d'une phase de réception de commandes de sélection successives (SEL(CH2)-SEL(CH4) par le dispositif d'accès et dont l'espacement entre commandes consécutives est inférieur à une durée donnée (Tmax) ; dite phase de zapping rapide;
- pour au moins une partie des requêtes d'accès transmises correspondant à des commandes de sélection reçues au cours de la phase détectée, une transmission au serveur de contenus d'une requête d'accès incluant une donnée informant qu'une phase de zapping rapide a été détectée, et une étape de réception en retour, depuis le serveur de contenus, d'un contenu autre que le contenu demandé, ledit autre contenu étant une image incluant des informations relatives au contenu demandé.

2. Procédé selon la revendication 1, **caractérisé en ce que** ledit au moins un autre contenu inclut en outre des données informatives relatives à des contenus autres que le contenu sélectionné.

3. Procédé selon la revendication 2, **caractérisé en ce que** les données informatives relatives à des contenus autres que le contenu sélectionné visent des données informatives relatives à au moins un contenu adjacent au contenu sélectionné.

4. Procédé selon la revendication 1, **caractérisé en ce que** l'espacement entre commandes de sélection consécutives concerne l'espacement entre la commande de sélection courante et la commande de sélection reçue ultérieurement

5. Procédé selon la revendication 4, **caractérisé en ce qu'**il comprend une étape, pour chaque commande de sélection reçue, de déclenchement d'une temporisation (Tmax), et une étape de transmission de la requête d'accès correspondante à l'issue de la temporisation (Tmax) si aucune commande de sélection n'est reçue au cours de cette première temporisation.

6. Procédé de gestion selon la revendication 1, **caractérisé en ce que** l'espacement entre commandes consécutives concerne l'espacement entre la commande courante et la commande précédemment reçue.

7. Dispositif d'accès (STB) à des contenus multimédias (CH1-CH5) via un réseau de communication (RES), les contenus étant stockés sur un serveur de contenus, le dispositif d'accès étant apte à recevoir des commandes de sélection de contenus multimédias (SEL(CH1)-SEL(CH5)) depuis un dispositif de commande (TCD) et à transmettre des requêtes d'accès respectives (REQ(CH1)-REQ(CH5)) via le réseau de communication (RES) à destination du serveur de contenus, **caractérisé en ce qu'**il comprend
- un module de détection d'une phase de réception de commandes de sélection successives (SEL(CH2)-SEL(CH4) par le dispositif d'accès et dont l'espacement entre commandes consécutives est inférieur à une durée donnée (Tmax) , dite phase de zapping rapide
- un module de transmission apte à transmettre au serveur de contenus, pour au moins une partie des requêtes d'accès transmises correspondant à des commandes de sélection reçues au cours de la phase détectée, une requête d'accès incluant une donnée informant qu'une phase de zapping rapide a été détectée,
- un module de réception apte à recevoir en retour, depuis le serveur de contenus, un contenu autre que le contenu demandé, ledit autre contenu étant une image incluant des informations relatives au contenu demandé.

8. Programme d'ordinateur apte à être mis en œuvre sur un dispositif d'accès tel que défini dans la revendication 7, le programme comprenant des instructions de code qui, lorsqu'il est exécuté par un processeur, réalise les étapes du procédé définies dans l'une des revendications 1 à 6.

9. Support de données sur lequel a été mémorisée au moins une série d'instructions de code de programme pour l'exécution d'un procédé selon l'une des revendications 1 à 6.

10. Procédé de gestion de la fourniture de contenus multimédias par un serveur de contenus (PFS) à un dispositif d'accès (STB), via un réseau de communication (RES), le dispositif d'accès étant apte à recevoir des commandes de sélection de contenus multimédias (SEL(CH1)-SEL(CH5)) depuis un dispositif de commande (TCD) et à transmettre des requêtes d'accès respectives (REQ(CH1)-REQ(CH5)) correspondantes aux contenus via le réseau de communication (RES), **caractérisé en ce qu'**il comprend
- une obtention d'une donnée informant une détection d'une phase de réception de commandes de sélection successives (SEL(CH2)-SEL(CH4) par le dispositif d'accès et dont l'espacement entre commandes consécutives est inférieur à une durée donnée (Tmax), dite phase de zapping rapide ;
- pour au moins une partie des requêtes d'accès reçues, issues du dispositif d'accès, correspondant à des commandes de sélection reçues au cours de la phase de zapping rapide détectée, une transmission par le serveur de contenus à destination dispositif d'accès, à la place du contenu demandé, d'au moins une image incluant des données informatives relatives au contenu sélectionné.

11. Procédé de fourniture selon la revendication 10 **caractérisé en ce que** la transmission est précédée d'une obtention d'une donnée incluse dans la requête d'accès reçue, la donnée fournissant une information relative à la détection d'une phase de réception de commandes de sélection successives (SEL(CH2)-SEL(CH4) par le dispositif d'accès dont l'espacement entre commandes consécutives est inférieur à une durée donnée (Tmax).

12. Serveur de contenus apte à recevoir des requêtes d'accès à des contenus et à fournir les contenus en réponse, **caractérisé en ce qu'**il comprend
- un module d'obtention d'une donnée informantune détection d'une phase de réception de commandes de sélection successives (SEL(CH2)-SEL(CH4) par le dispositif d'accès dont l'espacement entre commandes consécutives est inférieur à une durée donnée (Tmax), dite phase de zapping rapide ;
- un module de transmission apte, en réponse à au moins une partie des requêtes d'accès reçues, issues du dispositif d'accès, correspondant à des commandes de sélection reçues au cours de la phase de zapping rapide détectée, à transmettre par le serveur de contenus à destination dispositif d'accès, à la place du contenu demandé, au moins une image incluant des données informatives relatives au contenu sélectionné.

13. Programme d'ordinateur apte à être mis en œuvre sur une entité de gestion (MNG) telle que définie dans la revendication 12, le programme comprenant des instructions de code qui, lorsqu'il est exécuté par un processeur, réalise les étapes du procédé définies dans l'une des revendications 10 à 11.

14. Support de données sur lequel a été mémorisée au moins une série d'instructions de code de programme pour l'exécution d'un procédé selon l'une des revendications 10 à 11.

## Patentansprüche

1. Verfahren zur Verwaltung des Zugriffs einer Zugangsvorrichtung (STB) auf Multimedia-Inhalte (CH1-CH5) über ein Kommunikationsnetzwerk (RES), wobei die Inhalte auf einem Inhalteserver gespeichert sind, wobei die Zugangsvorrichtung in der Lage ist, Befehle zur Auswahl von Multimedia-Inhalten (SEL (CH1)-SEL(CH5)) von einer Steuervorrichtung (TCD) zu empfangen und entsprechende Zugriffsanfragen (REQ(CH1)-REQ(CH5)) über das Kommunikationsnetzwerk (RES) an den Inhalteserver zu übertragen, **dadurch gekennzeichnet, dass** es in der Zugangsvorrichtung Folgendes aufweist:
- das Erkennen einer Phase, in der aufeinanderfolgende Auswahlbefehle (SEL(CH2)-SEL(CH4)) von der Zugangsvorrichtung empfangen werden und der Abstand zwischen aufeinanderfolgenden Befehlen kleiner als eine vorgegebene Dauer (Tmax) ist; diese Phase wird als "Schnell-Zapping-Phase" bezeichnet;
- für zumindest einen Teil der übertragenen Zugriffsanfragen, die den während der erkannten Phase empfangenen Auswahlbefehlen entsprechen, das Übertragen einer Zugriffsanfrage an den Inhalteserver, die eine Angabe enthält, dass eine "Schnell-Zapping-Phase" erkannt wurde, und einen Schritt zum Empfangen eines anderen Inhalts als des angeforderten Inhalts vom Inhalteserver, wobei der andere Inhalt ein Bild ist, das Informationen über den angeforderten Inhalt enthält.

2. Verfahren nach Anspruch 1, **dadurch gekennzeichnet, dass** der mindestens eine andere Inhalt darüber hinaus Informationsdaten enthält, die sich auf andere Inhalte als den ausgewählten Inhalt beziehen.

3. Verfahren nach Anspruch 2, **dadurch gekennzeichnet, dass** die Informationsdaten, die sich auf andere Inhalte als den ausgewählten Inhalt beziehen, Informationsdaten betreffen, die sich auf mindestens einen an den ausgewählten Inhalt angrenzenden Inhalt beziehen.

4. Verfahren nach Anspruch 1, **dadurch gekennzeichnet, dass** der Abstand zwischen aufeinanderfolgenden Auswahlbefehlen den Abstand zwischen dem aktuellen Auswahlbefehl und dem nachfolgend empfangenen Auswahlbefehl betrifft.

5. Verfahren nach Anspruch 4, **dadurch gekennzeichnet, dass** es für jeden empfangenen Auswahlbefehl einen Schritt zum Auslösen einer Zeitverzögerung (Tmax) und einen Schritt zum Übertragen der entsprechenden Zugriffsanforderung nach Ablauf der Zeitverzögerung (Tmax) aufweist, sofern während dieser ersten Zeitverzögerung kein Auswahlbefehl empfangen wird.

6. Verfahren zur Verwaltung nach Anspruch 1, **dadurch gekennzeichnet, dass** der Abstand zwischen aufeinanderfolgenden Befehlen den Abstand zwischen dem aktuellen Befehl und dem zuvor empfangenen Befehl betrifft.

7. Zugangsvorrichtung (STB) auf Multimedia-Inhalte (CH1-CH5) über ein Kommunikationsnetzwerk (RES), wobei die Inhalte auf einem Inhalteserver gespeichert sind, wobei die Zugangsvorrichtung in der Lage ist, Befehle zur Auswahl von Multimedia-Inhalten (SEL (CH1)-SEL(CH5)) von einer Steuervorrichtung (TCD) zu empfangen und entsprechende Zugriffsanfragen (REQ(CH1)-REQ(CH5)) über das Kommunikationsnetzwerk (RES) an den Inhalteserver zu übertragen, **dadurch gekennzeichnet, dass** es Folgendes aufweist:
- ein Modul zum Erkennen einer Phase, in der aufeinanderfolgende Auswahlbefehle (SEL(CH2)-SEL(CH4)) von der Zugangsvorrichtung empfangen werden und der Abstand zwischen aufeinanderfolgenden Befehlen kleiner als eine vorgegebene Dauer (Tmax) ist; diese Phase wird als "Schnell-Zapping-Phase" bezeichnet;
- ein Modul zum Übertragen, das in der Lage ist, für mindestens einen Teil der übertragenen Zugriffsanfragen, die den während der erkannten Phase empfangenen Auswahlbefehlen entsprechen, eine Zugriffsanforderung an den Inhalteserver zu übertragen, die eine Angabe enthält, dass eine "Schnell-Zapping-Phase" erkannt wurde;
- ein Modul zum Empfangen, das in der Lage ist, vom Inhalteserver einen anderen Inhalt als den angeforderten Inhalt zu empfangen, wobei der andere Inhalt ein Bild ist, das Informationen über den angeforderten Inhalt enthält.

8. Computerprogramm, das geeignet ist, auf einer Zugriffsvorrichtung wie in Anspruch 7 definiert eingesetzt zu werden, wobei das Programm Codeanweisungen enthält, die bei seiner Ausführung durch einen Prozessor die in einem der Ansprüche 1 bis 6 definierten Schritte des Verfahrens ausführen.

9. Datenträger, auf dem mindestens ein Satz von Programmcodebefehlen zur Durchführung eines Verfahrens nach einem der Ansprüche 1 bis 6 gespeichert ist.

10. Verfahren zur Verwaltung der Bereitstellung von Multimedia-Inhalten durch einen Inhalteserver (PFS) an eine Zugangsvorrichtung (STB) über ein Kommunikationsnetzwerk (RES), wobei die Zugangsvorrichtung in der Lage ist, Befehle zur Auswahl von Multimedia-Inhalten (SEL (CH1)-SEL(CH5)) von einer Steuervorrichtung (TCD) zu empfangen und entsprechende Zugriffsanfragen (REQ(CH1)-REQ(CH5)), die den Inhalten entsprechen, über das Kommunikationsnetzwerk (RES) zu übertragen, **dadurch gekennzeichnet, dass** es Folgendes aufweist:
- Erhalten einer Angabe zum Erkennen einer Phase, in der aufeinanderfolgende Auswahlbefehle (SEL(CH2)-SEL(CH4)) von der Zugangsvorrichtung empfangen werden und der Abstand zwischen aufeinanderfolgenden Befehlen kleiner als eine vorgegebene Dauer (Tmax) ist; diese Phase wird als "Schnell-Zapping-Phase" bezeichnet;
- für mindestens einen Teil der von der Zugangsvorrichtung empfangenen Zugriffsanfragen, die den während der erkannten "Schnell-Zapping-Phase" empfangenen Auswahlbefehlen entsprechen, das Übertragen mindestens eines Bildes, das Informationsdaten über den angeforderten Inhalt enthält, durch den Inhalteserver an die Zugangsvorrichtung anstelle des angeforderten Inhalts.

11. Verfahren zur Bereitstellung nach Anspruch 10, **dadurch gekennzeichnet, dass** dem Übertragen das Erhalten einer Angabe vorausgeht, die in der empfangenen Zugriffsanforderung enthalten ist, wobei die Angabe eine Information zum Erkennen einer Phase bereitstellt, in der aufeinanderfolgende Auswahlbefehle (SEL(CH2)-SEL(CH4)) von der Zugangsvorrichtung empfangen werden und der Abstand zwischen aufeinanderfolgenden Befehlen kleiner als eine vorgegebene Dauer (Tmax) ist.

12. Inhalteserver, der dazu ausgelegt ist, Zugriffsanfragen auf Inhalte zu empfangen und die Inhalte als Antwort bereitzustellen, **dadurch gekennzeichnet, dass** er Folgendes aufweist:
- ein Modul zum Erhalten einer Angabe zum Erkennen einer Phase, in der aufeinanderfolgende Auswahlbefehle (SEL(CH2)-SEL(CH4)) von der Zugangsvorrichtung empfangen werden und der Abstand zwischen aufeinanderfolgenden Befehlen kleiner als eine vorgegebene Dauer (Tmax) ist; diese Phase wird als "Schnell-Zapping-Phase" bezeichnet;
- ein Modul zum Übertragen, das in der Lage ist, als Antwort auf mindestens einen Teil der von der Zugangsvorrichtung empfangenen Zugriffsanfragen, die den während der erkannten "Schnell-Zapping-Phase" empfangenen Auswahlbefehlen entsprechen, mindestens ein Bild, das Informationsdaten über den angeforderten Inhalt enthält, durch den Inhalteserver an die Zugangsvorrichtung anstelle des angeforderten Inhalts zu übertragen.

13. Computerprogramm, das geeignet ist, auf einer Verwaltungseinheit (MNG) wie in Anspruch 12 definiert eingesetzt zu werden, wobei das Programm Codeanweisungen enthält, die bei seiner Ausführung durch einen Prozessor die in einem der Ansprüche 10 bis 11 definierten Schritte des Verfahrens ausführen.

14. Datenträger, auf dem mindestens ein Satz von Programmcodebefehlen zur Durchführung eines Verfahrens nach einem der Ansprüche 10 bis 11 gespeichert ist.

## Claims

1. Method for managing access, by an access device (STB), to multimedia contents (CH1-CH5) via a communication network (RES), the contents being stored on a content server, the access device being able to receive multimedia content selection commands (SEL(CH1)-SEL(CH5)) from a control device (TCD) and transmit respective access requests (REQ(CH1)-REQ(CH5)) via the communication network (RES) to the content server, **characterized in that** it comprises, in the access device,
- a detection of a phase of reception of successive selection commands (SEL(CH2)-SEL(CH4) by the access device and in which the spacing between consecutive commands is less than a given time (Tmax), which phase is called the fast zapping phase;
- for at least some of the transmitted access requests corresponding to selection commands received during the detected phase, a transmission to the content server of an access request including a datum informing that a fast zapping phase has been detected, and a step of reception in return, from the content server, of a content other than the requested content, said other content being an image including information relating to the requested content.

2. Method according to Claim 1, **characterized in that** said at least one other content also includes informative data relating to contents other than the selected content.

3. Method according to Claim 2, **characterized in that** the informative data relating to contents other than the selected content target informative data relating to at least one content adjacent to the selected content.

4. Method according to Claim 1, **characterized in that** the spacing between consecutive selection commands concerns the spacing between the current selection command and the selection command received subsequently.

5. Method according to Claim 4, **characterized in that** it comprises a step, for each selection command received, of triggering of a time delay (Tmax), and a step of transmission of the corresponding access request at the end of the time delay (Tmax) if no selection command is received during this first time delay.

6. Management method according to Claim 1, **characterized in that** the spacing between consecutive commands relates to the spacing between the current command and the command previously received.

7. Access device (STB) for accessing multimedia contents (CH1-CH5) via a communication network (RES), the contents being stored on a content server, the access device being able to receive multimedia content selection commands (SEL(CH1)-SEL(CH5)) from a control device (TCD) and transmit respective access requests (REQ(CH1)-REQ(CH5)) via the communication network (RES) to the content server, **characterized in that** it comprises
- a module for detecting a phase of reception of successive selection commands (SEL(CH2)-SEL(CH4) by the access device and in which the spacing between consecutive commands is less than a given time (Tmax), which phase is called the fast zapping phase;
- a transmission module capable of transmitting, to the content server, for at least some of the transmitted access requests corresponding to selection commands received during the detected phase, an access request including a datum informing that a fast zapping phase has been detected;
- a reception module capable of receiving in return, from the content server, a content other than the requested content, said other content being an image including information relating to the requested content.

8. Computer program that can be implemented on an access device as defined in Claim 7, the program comprising code instructions which, when it is run by a processor, performs the steps of the method defined in one of Claims 1 to 6.

9. Data medium on which is stored at least one series of program code instructions for the execution of a method according to one of Claims 1 to 6.

10. Method for managing the provision of multimedia contents by a content server (PFS) to an access device (STB), via a communication network (RES), the access device being able to receive multimedia content selection commands (SEL(CH1)-SEL(CH5)) from a control device (TCD) and transmit respective access requests (REQ(CH1)-REQ(CH5)) corresponding to the contents via the communication network (RES), **characterized in that** it comprises
- the obtaining of a datum informing of detection of a phase of reception of successive selection commands (SEL(CH2)-SEL(CH4) by the access device and in which the spacing between consecutive commands is less than a given time (Tmax), which phase is called the fast zapping phase;
- for at least some of the received access requests, generated by the access device, corresponding to selection commands received during the detected fast zapping phase, a transmission, by the content server to the access device, in place of the requested content, of at least one image including informative data relating to the selected content.

11. Provision method according to Claim 10, **characterized in that** the transmission is preceded by the obtaining of a datum included in the received access request, the datum providing information relating to the detection of a phase of reception of successive selection commands (SEL(CH2)-SEL(CH4) by the access device in which the spacing between consecutive commands is less than a given time (Tmax).

12. Content server capable of receiving content access requests and providing the contents in response, **characterized in that** it comprises
- a module for obtaining a datum informing of detection of a phase of reception of successive selection commands (SEL(CH2)-SEL(CH4) by the access device in which the spacing between consecutive commands is less than a given time (Tmax), which phase is called the fast zapping phase;
- a transmission module capable, in response to at least some of the received access requests, generated by the access device, corresponding to selection commands received during the detected fast zapping phase, of transmitting, by means of the content server to the access device, in place of the requested content, at least one image including informative data relating to the selected content.

13. Computer program that can be implemented on a management entity (MNG) as defined in Claim 12, the program comprising code instructions which, when it is run by a processor, performs the steps of the method defined in one of Claims 10 and 11.

14. Data medium on which is stored at least one series of program code instructions for the execution of a method according to one of Claims 10 to 11.
